# EUROPÄISCHE PATENTANMELDUNG

(11) **EP 4 729 380 A1**
(43) Veröffentlichungstag der Anmeldung: **22.04.2026**
(21) Anmeldenummer: 25202631.5
(22) Anmeldetag: 17.09.2025
(51) Int. Cl.: B60T 13/68, B60T 15/12, B60T 15/18, B60T 17/04, B60T 13/26, F16D 65/00

(54) **VENTILSYSTEM**

(30) Priorität: 21.10.2024 DE 102024210168
(71) Anmelder: ZF CV Systems Global GmbH, 3006 Bern (CH)
(72) Erfinder: Brütt, Mirko, 31832 Springe (DE); Jakubowska, Magdalena, 54-440 Wroclaw (PL); Owczarek, Michal, 51-114 Wroclaw (PL); Chenski, Przemys lw, 54-234 Wroclaw (PL)
(74) Vertreter: ZF Friedrichshafen AG

(57) **Zusammenfassung**

Die Erfindung betrifft ein Ventilsystem (301) für ein hydraulisch bremsbares Zugfahrzeug, welches ein Anhängerfahrzeug zieht. Das Ventilsystem (301) umfasst ein Relaisventil (46), ein Wechselventil (10) und eine Bremssteuerleitung (62), wobei das Relaisventil (46) mittels eines hydraulischen Steuerdrucks betätigt wird, sodass die Höhe eines pneumatischen Bremsdrucks eingestellt wird, der durch das Relaisventil (46) ausgegeben wird, um ein pneumatisches Bremssystem des Anhängerfahrzeugs mit Druckluft zu versorgen. Weiterhin verbindet die Bremssteuerleitung (62) das Relaisventil (46) mit dem Wechselventil (10) pneumatisch. Ferner ist die Bremssteuerleitung (62) mit einer Kavität (302) verbunden, dessen Volumen (V) größer ist als 500 mm³.

## Beschreibung

Die Erfindung betrifft ein Ventilsystem, insbesondere ein Ventilsystem für ein hydraulisch bremsbares Zugfahrzeug, welches ein Anhängerfahrzeug zieht.

Aus der DE 10 2013 016 086 A1 sind ein Verfahren und Vorrichtung zum Dimensionieren eines Interferenzschalldämpfers in einer Druckluftbremsanlage in einem Kraftfahrzeug bekannt. Der Interferenzschalldämpfer kann insbesondere in Druckluftleitungen zwischen einem Ventil und einem Vorratsdruckbehälter eingesetzt werden. Der Interferenzschalldämpfer besteht aus zwei parallelen, in die Druckluftleitungen eingefügten Leitungselementen, von denen das erste, längere Leitungselement eine Länge etwa gleich der Wellenlänge λ der Schwingung in der Druckluftleitung und das zweite, kürzere Leitungselement eine Länge etwa gleich der halben Wellenlänge λ/2 der Schwingung in der Druckluftleitung aufweist. Der Interferenzschalldämpfer dient dazu, durch das Schalten des Ventils ausgelöste, Geräusche bildende Schwingungen in der Druckluftleitung auszulöschen bzw. möglichst stark zu dämpfen.

Eine Aufgabe der vorliegenden Erfindung kann darin gesehen werden, eine Technologie bereitzustellen, mittels welcher die vorstehend beschriebenen Schwingungen bzw. Oszillationen auf eine alternative und besonders einfache Art und Weise unterdrückt werden können. Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Die vorliegende Erfindung schlägt eine feste konstruktive Lösung zur Überwindung der vorstehend beschriebenen Oszillation vor. Diese konstruktive Lösung ist unabhängig von anderen Faktoren, die eine hochfrequente Druckoszillation beeinflussen. In diesem Zusammenhang können insbesondere die folgenden Faktoren als relevant identifiziert werden: Temperatur/Ölviskosität, Dämpfung des Bremspedals, Federkraft des Hauptzylinders, Leitungslänge/-durchmesser zwischen Hauptzylinder und hydraulischem Wandler (inkl. Verschraubungen) sowie Druckhöhe und Betriebszustand (Rampe/Sprung). Um all diese verschiedenen Aspekte in einer Konstruktion abzudecken, die bei einem Einsatz des Anhängersteuerventilsystems in verschiedenen Fahrzeugplattformen später nicht angepasst werden muss, wird die im Folgenden beschriebene, robuste Lösung in Betracht gezogen. Ein sehr effektives Mittel zur Unterdrückung der Oszillation ist ein vergrößertes Volumen zwischen dem Ausgang des Hydraulik-Luft-Wandlers (Relaisventil) und dem Wechselventil. Dieses vergrößerte Volumen verhindert ein zu schnelles Befüllen des Weges hinter dem Hydraulik-Luft-Wandler. Die Erfinder haben herausgefunden, dass das genannte Volumen größer sein muss als die aus dem Stand der Technik bekannten 5.000 mm³.

In diesem Sinne wird gemäß einem Aspekt der Erfindung ein Ventilsystem für ein hydraulisch bremsbares Zugfahrzeug vorgeschlagen, welches ein Anhängerfahrzeug zieht. Das Ventilsystem umfasst ein Relaisventil, ein Wechselventil und eine Bremssteuerleitung. Unter einem Relaisventil kann im Zusammenhang mit der vorliegenden Erfindung ein pneumatisches Ventil verstanden werden, das in Bremsanlagen, insbesondere in Anhängerbremsanlagen, verwendet wird. Es dient zur Verstärkung oder Weiterleitung eines pneumatischen Steuerdrucks und wird oft zur Steuerung des pneumatischen Bremsdrucks eines Anhängers eingesetzt. Das Relaisventil wird durch einen hydraulischen Steuerdruck betätigt, der vom Zugfahrzeug ausgeht. Je nach Höhe des hydraulischen Steuerdrucks moduliert das Relaisventil den Ausgangsdruck, welcher dann das pneumatische Bremssystem des Anhängers versorgt. Dadurch wird sichergestellt, dass der Anhänger synchron und proportional zur Bremskraft des Zugfahrzeugs bremst. Ein Wechselventil ist ein pneumatisches oder hydraulisches Ventil, das zwei Leitungen miteinander verbindet und je nach Druckverhältnissen zwischen diesen Leitungen wechselt. In einem hydraulisch-pneumatischen Bremssystem wird das Wechselventil verwendet, um sicherzustellen, dass nur der korrekte Steuerdruck weitergeleitet wird. Es ermöglicht den Wechsel zwischen verschiedenen Druckquellen oder Steuerkreisen, sodass immer der vorgesehene Steuerdruck ausgegeben wird. Die Bremssteuerleitung ist eine pneumatische Leitung, die in einem Zugfahrzeug-Anhänger-Verbund zur Steuerung des Anhängerbremssystems verwendet wird. Sie verbindet das Relaisventil mit dem Wechselventil und dient dazu, den vom Relaisventil erzeugten pneumatischen Bremsdruck an das Bremssystem des Anhängers weiterzuleiten.

Das Relaisventil wird mittels eines hydraulischen Steuerdrucks betätigt, sodass die Höhe eines pneumatischen Bremsdrucks eingestellt wird, der durch das Relaisventil ausgegeben wird, um ein pneumatisches Bremssystem des Anhängerfahrzeugs mit Druckluft zu versorgen. An dem Relaisventil liegen der hydraulische Steuerdruck und ein pneumatischer Druck an. Die Höhe eines ausgegebenen pneumatischen Drucks (der pneumatische Bremsdruck) hängt von der Höhe des hydraulischen Steuerdrucks ab. Die Bremssteuerleitung verbindet das Relaisventil pneumatisch mit dem Wechselventil. Unter dem Merkmal "pneumatisch verbunden" ist insbesondere zu verstehen, dass die jeweils miteinander verbundenen Elemente pneumatisch leitend miteinander verbunden sind, d.h. dass Gas, insbesondere Luft, von dem einen Element zu dem anderen Element strömen kann und ggfs. umgekehrt. Unter dem Merkmal "getrennt" oder "nicht verbunden" kann insbesondere verstanden werden, dass die jeweils voneinander getrennten Elemente nicht pneumatisch leitend miteinander verbunden sind, d.h. dass kein Gas, insbesondere Luft, von dem einen Element zu dem anderen Element strömen kann und ggfs. umgekehrt. Analoges gilt für hydraulische Verbindungen.

Die Bremssteuerleitung ist mit einer Kavität verbunden, dessen Volumen größer ist als 5.000 mm³. Unter einer Kavität kann eine Hohlraumstruktur oder Aussparung innerhalb eines mechanischen Systems oder Bauteils verstanden werden. In dem vorliegenden pneumatischen System dient die Kavität als Volumenreservoir oder als Raum, in dem sich ein Gas wie Druckluft sammeln kann. Wenn die Kavität in Verbindung mit der Bremssteuerleitung verwendet wird, kann sie einen Beitrag leisten, Schwankungen im Druck abzufedern, zusätzliche Stabilität in der Druckregelung zu bieten und als Ausgleichsraum zu fungieren. Die Größe der Kavität, im vorliegenden Fall mit einem Volumen von größer als 5.000 mm³, beeinflusst die Dynamik des Systems, insbesondere in Bezug auf das Oszillationsverhalten positiv.

Insbesondere haben die Erfinder herausgefunden, dass ein Volumen von 5.000 mm³ für die Verbindung zwischen Relaisventil und Wechselventil immer noch zu Druckschwingungen führen kann, wohingegen ein Volumen von 12.000 mm³ robust genug ist, um einer Variation der oben erwähnten Parameter standzuhalten. In diesem Sinne ist gemäß einer weiteren Ausführungsform vorgesehen, dass das Volumen wenigstens 12.000 mm³ groß ist.

Die Kavität kann durch die Bremssteuerleitung begrenzt werden. Mit anderen Worten schließt die Bremssteuerleitung die Kavität ein. Das Volumen der Kavität kann dabei durch eine bestimmte Länge und einen bestimmten Durchmesser der Bremssteuerleitung erzeugt werden, sodass sich die genannte, vergrößerte Volumenabmessung ergibt. In diesem Sinne ist gemäß einer Ausführungsform vorgesehen, dass die Bremssteuerleitung die Kavität begrenzt.

Obwohl 12.000 mm³ bzw. 12 cm³ ein recht kleines Volumen zu sein scheint, kann es eine Herausforderung sein, ein solches Volumen in ein Gerät zu integrieren, das so kompakt und klein wie möglich sein soll. Zur Lösung dieser Aufgabe kann die Bremssteuerleitung in ein Gehäuse des Ventilsystems integriert werden. In diesem Sinne ist gemäß einer weiteren Ausführungsform vorgesehen, dass das Ventilsystem weiterhin ein Gehäuse umfasst, wobei das Gehäuse die Bremssteuerleitung wenigstens teilweise, insbesondere vollständig formt. Mit anderen Worten kann - um die Gesamtabmessungen des Ventilsystems nicht zu vergrößern - die Bremssteuerleitung als Kanal in das Gehäuse integriert sein. Die Kavität kann dabei Freiräume um andere Formen herum nutzen, um das Gesamtdesign des Ventilsystems nicht zu vergrößern.

Die komplexe Form des Hohlraums kann durch das Gießen von zwei Gehäuseteilen ermöglicht werden, die miteinander verbunden werden bzw. sind. In diesem Sinne ist gemäß einer weiteren Ausführungsform vorgesehen, dass das Gehäuse ein gegossenes erstes Gehäuseteil und ein gegossenes zweites Gehäuseteil umfasst, wobei das erste Gehäuseteil und das zweite Gehäuseteil zusammengesetzt sind und gemeinsam die Bremssteuerleitung formen. Insbesondere kann das erste Gehäuseteil einen ersten Teil der Bremssteuerleitung und das zweite Gehäuseteil einen zweiten Teil der Bremssteuerleitung formen. Somit wird die Kavität durch die beiden Gehäuseteile geformt. Dabei kann es sich bei dem ersten Gehäuseteil beispielsweise um ein oberes Gehäuseteil und bei dem zweiten Gehäuseteil um ein unteres Gehäuseteil handeln. In diesem Fall bildet bzw. formt dann das obere Gehäuseteil im Sinne einer oberen Teilkavität einen oberen Teil der Bremssteuerleitung und das untere Gehäuseteil im Sinne einer unteren Teilkavität einen unteren Teil der Bremssteuerleitung.

Alternativ kann die Kavität ein spezielles Volumen nutzen, insbesondere ein Volumen eines kleinen Behälters (z.B. eines Tanks), der direkt mit dem Pfad zwischen dem Relaisventil und dem Wechselventil verbunden ist. Dadurch kann ein komplexes Design des Gehäuses des Ventilsystems selbst vermieden werden. Somit begrenzt die Bremssteuerleitung zumindest nicht allein die Kavität, sondern dies kann zu einem großen Teil durch den Behälter erfolgen. Der Behälter wird insbesondere nicht durch das Gehäuse des Ventilsystems geformt. Stattdessen handelt es sich bei dem Behälter insbesondere um ein separates Bauteil des Ventilsystems, das beispielsweise außerhalb des Gehäuses angeordnet ist. In diesem Sinne ist gemäß einer weiteren Ausführungsform vorgesehen, dass das Ventilsystem weiterhin einen Behälter zum Speichern von Druckluft umfasst, wobei der Behälter zwischen dem Relaisventil und dem Wechselventil mit der Bremssteuerleitung verbunden ist.

Der Behälter kann eine pneumatische Verbindungsleitung umfassen, welche den Behälter pneumatisch mit der Bremssteuerleitung verbindet. Das Volumen der Kavität setzt sich aus einem ersten Volumen einer ersten Teilkavität und einem zweiten Volumen einer zweiten Teilkavität zusammen. Druckluft, die durch das Relaisventil ausgegeben wird, kann in die Bremssteuerleitung und in den Behälter strömen und sich insbesondere in dem Behälter sammeln, ohne dort einen derart hohen Druck aufzubauen, der zu der vorstehend beschriebenen Oszillation führt. Der Behälter kann insbesondere eine größere Teilkavität begrenzen als die Bremssteuerleitung. Dadurch kann die Bremssteuerleitung relativ klein dimensioniert werden, sodass die als Ganzes vergrößerte Kavität nicht zu einer Vergrößerung des Gehäuses führt. In diesem Sinne ist gemäß einer weiteren Ausführungsform vorgesehen, dass sich die Kavität aus einer kleineren ersten Teilkavität und einer größeren zweiten Teilkavität zusammensetzt. Dabei wird die erste Teilkavität durch die Bremssteuerleitung begrenzt, wohingegen die zweite Teilkavität durch den Behälter begrenzt wird.

Das Relaisventil kann insbesondere in einem Redundanzpfad bzw. in einem redundanten Steuerzweig zur hydraulischen Steuerung des Bremssteuerdruckes für das Anhängerfahrzeug angeordnet sein. Ein elektronisches Steuergerät kann dabei in einem Normalbetrieb (d.h., wenn das elektronische Steuergerät wie vorgesehen funktioniert oder zumindest nicht ausgefallen ist) ein weiteres Relaisventil ("Hauptrelaisventil") steuern, um einen vorgesehenen Bremssteuerdruck für das pneumatische Bremssystem des Anhängerfahrzeugs bereitzustellen. Wenn das elektronische Steuergerät ausfällt oder zumindest nicht wie vorgesehen funktioniert, dann kann ein an einer Bremsleitung des Zugfahrzeugs abgegriffener hydraulischer Bremsdruck genutzt werden, um das Relaisventil im Sinne eine Redundanz-Relaisventils derart zu steuern, dass ein Bremssteuerdruck für das Anhängerfahrzeug eingestellt wird, der an einen Kupplungskopf "Bremse" weitergeleitet werden kann. Hierdurch ist die Funktion der Betriebsbremsen des Anhängerfahrzeugs auch bei einem Ausfall der elektronischen Steuerung des Anhängersteuerventils gewährleistet. In diesem Sinne ist gemäß einer weiteren Ausführungsform vorgesehen, dass das Ventilsystem weiterhin ein elektronisches Steuergerät und ein weiteres Relaisventil umfasst. Dabei ist das elektronische Steuergerät in einem Normalbetrieb dazu eingerichtet, das Ventilsystem derart zu steuern, dass das weitere Relaisventil einen Bremssteuerdruck für das pneumatische Bremssystem des Anhängerfahrzeugs bereitstellt. Weiterhin ist das Relaisventil im Sinne eines Redundanzventils dazu eingerichtet, bei einem Ausfall des elektronischen Steuergeräts mittels des hydraulischen Steuerdrucks derart betätigt zu werden, dass das Relaisventil das pneumatische Bremssystem des Anhängerfahrzeugs mit Druckluft versorgt.

Der hydraulische Bremsdruck kann mittels eines Bremspedals durch einen Fahrer des Zugfahrzeugs gesteuert werden. Der Fahrer tritt auf das Bremspedal und betätigt dadurch einen Kolbenschieber eines mit Hydraulikflüssigkeit, insbesondere mit Öl gefüllten Hauptzylinders, sodass die Hydraulikflüssigkeit unter Druck gesetzt und über einen Hydrauliksteuerkanal zu dem Relaisventil geleitet wird. Die vorstehend beschriebene Kavität mit vergrößertem Volumen leistet einen Beitrag, Oszillationen bzw. Schwingungen zu unterdrücken, die sich über die Hydraulikflüssigkeit bis zu einem Fuß des Fahrers ausbreiten können, der das Bremspedal betätigt. In diesem Sinne ist gemäß einer weiteren Ausführungsform vorgesehen, dass das Relaisventil mit einem Hydrauliksteuerkanal verbunden ist, welcher den hydraulischen Steuerdruck bereitstellt. Dabei ist der Hydrauliksteuerkanal mit einem Hauptzylinder verbunden, der ein Bremspedal und einen Kolbenschieber aufweist und mit einer Hydraulikflüssigkeit gefüllt ist. Weiterhin wird der Kolbenschieber durch Betätigen des Bremspedals derart innerhalb des Hauptzylinders verschoben, dass der Kolbenschieber die Hydraulikflüssigkeit unter Druck setzt und in den Hydrauliksteuerkanal fördert.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: ein hydraulisch/pneumatisches Schaltbild einer Bremsanlage,
- Fig. 2: ein schematische Darstellung eines Anhängersteuermoduls,
- Fig. 3: eine schematische Darstellung eines Ventilsystems gemäß einem ersten Ausführungsbeispiel der Erfindung,
- Fig. 4: eine perspektivische Ansicht eines Gehäuses eines Ventilsystems gemäß einem zweiten Ausführungsbeispiel der Erfindung,
- Fig. 5: eine perspektivische Ansicht einer Bremssteuerleitung, die durch ein Gehäuse des Ventilsystems nach Fig. 4 geformt wird, und
- Fig. 6: eine schematische Darstellung eines Ventilsystems gemäß einem dritten Ausführungsbeispiel der Erfindung.

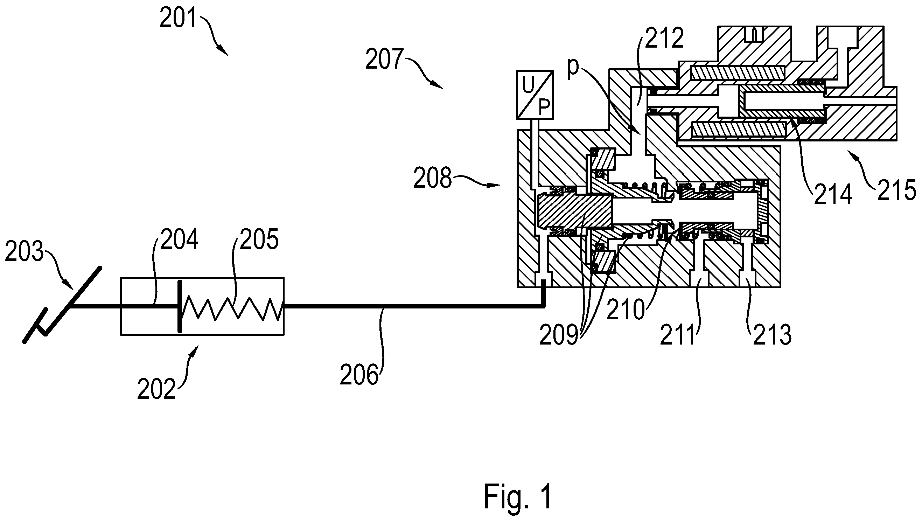

Fig. 1 zeigt einen Teil eines Bremssystems 201 eines nicht weiter dargestellten Zugfahrzeugs, z. B. eines Traktors. Das Bremssystem 201 umfasst einen hydraulischen Hauptzylinder 202. Bei dem gezeigten Bremssystem 201 betätigt der Fahrer des Zugfahrzeugs ein Bremspedal 203 und drückt damit auf einen Kolbenschieber 204 innerhalb des Hauptzylinders 202, um Hydraulikflüssigkeit unter Druck zu setzen. Der Kolbenschieber 204 ist durch eine Feder 205 vorgespannt. Die unter Druck stehende Hydraulikflüssigkeit wird über Leitungen zu einem nicht gezeigten Radbremszylinder des Zugfahrzeugs geleitet. Außerdem wird die unter Druck stehende Hydraulikflüssigkeit über einen Hydrauliksteuerkanal 206 zu einem Anhänger-Bremsdruckregelsystem 207 geleitet.

Ein nicht gezeigtes Anhängerfahrzeug wird von dem Zugfahrzeug gezogen und ist mit dem Anhänger-Bremsdruckregelsystem 207 des Zugfahrzeugs verbunden. Innerhalb des Anhänger-Bremsdruckregelsystems 207 wirkt die Druckflüssigkeit unter anderem in einer Backup-Relaisventilanordnung 208 auf eine Kolben-Feder-Struktur 209, die ein hydraulisch betätigtes pneumatisches Backuprelaisventil 210 entgegen einer Federvorspannung in einen geöffneten Zustand versetzen kann. Wenn sich das Backuprelaisventil 210 in dem geöffneten Zustand befindet, dann ist ein Lufteingang 211 des Backuprelaisventils 210 mit einem Luftausgang 212 des Backuprelaisventils 210 verbunden, wohingegen ein Entlüftungsanschluss 213 des Backuprelaisventils 210 von dessen Lufteingang 211 und Luftausgang 212 getrennt ist. Um den vorstehend beschriebenen, pneumatischen Backup-Pfad zu unterdrücken, während das elektronische Anhänger-Bremsdruckregelsystem 207 fehlerfrei arbeitet, kann das als 3/2-Wegeventil ausgeführte Backuprelaisventil 210 in einen geschlossenen Zustand versetzt werden. Eine derartige Systemstruktur kann zu einer hochfrequenten Druckschwingung führen. Normalerweise ist in einem solchen System kein Dämpfungselement vorgesehen, um die Schwingung zu reduzieren.

Während der Unterdrückung des pneumatischen Ausgangsdrucks p des Backuprelaisventils 210 wird eine Armatur 214 eines Magnetventils 215 geschlossen und führt zu einem kleinen Luftvolumen, das sich zwischen dem Backuprelaisventil 210 und der Armatur 214 befindet. Wenn sich weder im Bereich des Hauptzylinders 202 noch in dem Hydrauliksteuerkanal 206 ein Dämpfungselement befindet, dann kann ein Druck auf das Bremspedal 203 zu einem schlagartigen Öffnen des hydraulisch betätigten pneumatischen Backuprelaisventils 210 führen, welches den Lufteingang 211 (pneumatische Versorgung) mit dem Luftausgang 212 (pneumatischer Ausgangsdruck p) verbindet. Das ungedämpfte hydraulische Signal öffnet nun das Backuprelaisventil 210 und das vorstehend genannte kleine Luftvolumen wird mit einem zu hohen Druck gefüllt. Infolgedessen wird das Backuprelaisventil 210 plötzlich in den geschlossenen Zustand versetzt, wobei der Luftausgang 212 mit dem Entlüftungsanschluss 213 verbunden wird. Das kleine Luftvolumen wird in kurzer Zeit evakuiert, sodass das gewünschte Druckniveau zu niedrig ist. Wieder öffnet der hydraulische Druck das Backuprelaisventil 210 und füllt den pneumatischen Ausgangsdruck auf. Dieses Öffnen und Schließen des Backuprelaisventils 210 kann in bestimmten Situationen zu einer hochfrequenten Bewegung der Kolben-Feder-Struktur 209 führen. Eine damit verbundene Pulsation kann sich über den Hydrauliksteuerkanal 206 auf den Hauptzylinder 202 zurück übertragen, sodass sie im Bremspedal 203 spürbar ist.

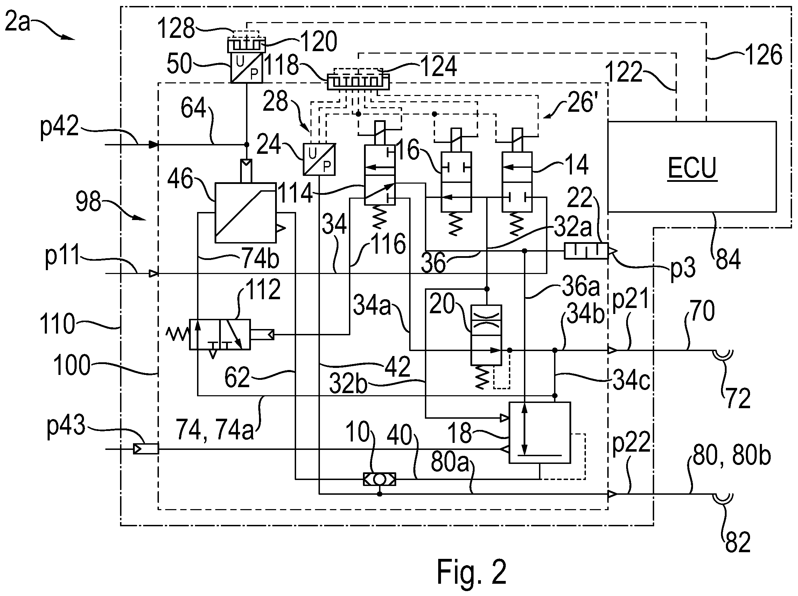

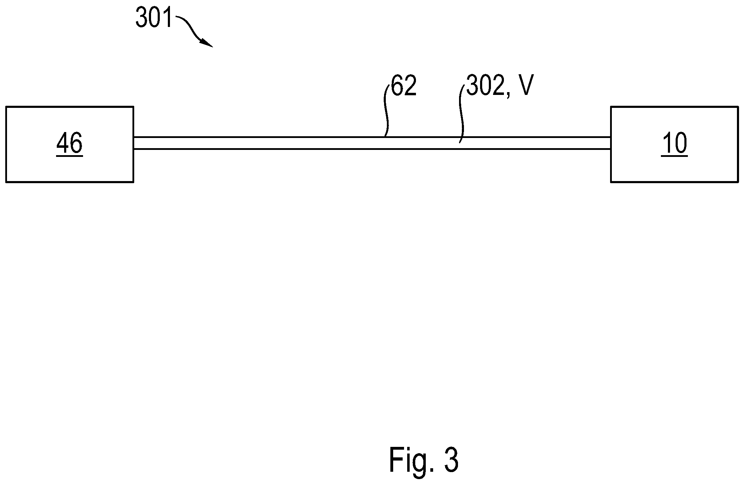

Um solche hochfrequenten Schwingungen, die die Belastung der Bauteile erhöhen, ein unkomfortables Bremsverhalten und Abgasgeräusche erzeugen, zu vermeiden, kann gemäß Stand der Technik ein nicht gezeigtes Drosselrückschlagventil in dem Hydrauliksteuerkanal 206 eingesetzt werden. Dieses ermöglicht einen schnellen Bremsdruckanstieg, dämpft aber den Rückfluss der Hydraulikflüssigkeit bei Oszillation. Eine alternative Lösung, die keine zusätzlichen Komponenten erfordert, ist durch Fig. 2 gezeigt, die aus der DE 10 2019 100 869 A1 bekannt ist (dort Fig. 1; vgl. insbesondere die Ausführungen in der Figurenbeschreibung zur Fig. 1, beispielsweise die Absätze [0026] und [0043] bis [0045], welche die Fig. 1 beschreiben, sowie die ergänzenden Ausführungen zur Fig. 3 in den Absätzen [0027] bis [0042] für weitere nicht in der vorliegenden Offenbarung beschriebenen Elemente und Funktionalitäten). In dem Ausführungsbeispiel gemäß Fig. 2 der vorliegenden Offenbarung befindet sich die Position eines 3/2-Magnetventils 112, das den Backup-Ventildruck unterdrückt, in der Versorgung eines Relaisventils 46 eines Backupventils 8. Bei einer Bremsung öffnet der hydraulische Druck das Relaisventil 46 vollständig. Da aber die pneumatische Druckversorgung unterbrochen ist, wird eine Oszillation unterdrückt.

In einem Normalbetrieb wird von einem Bremssensor, der in einem Fußbremsventil (vgl. die Ausführungen zu dem Bremspedal 203 und Hauptzylinder 202 im Zusammenhang mit Fig. 1) des Zugfahrzeugs angeordnet ist, ein Bremswertsignal ermittelt und an ein elektronisches Steuergerät 84 übertragen. Bei einer Betätigung des Fußbremsventils wird durch eine entsprechende Ansteuerung eines Einlassventils 14 und eines Auslassventils 16 in Steuerdruckleitungen 32a, 32b ein Steuerdruck eingestellt, der in einem weiteren Relaisventil 18 ("Hauptrelaisventil") die Einsteuerung eines entsprechenden Bremssteuerdruckes in einer internen Bremssteuerleitung 40 bewirkt. Der eingestellte Bremssteuerdruck wird über ein Wechselventil 10, einen Bremssteuerausgang p22 und eine ausgangsseitige Bremssteuerleitung 80 an einen Kupplungskopf "Bremse" (gelb) 82 geführt.

Weiterhin kann über einen invertierten Steuerdruckeingang p43 eine Feststellbremse oder eine Dauerbremsfunktion betätigt werden. In dem Ausführungsbeispiel nach Fig. 2 führt eine Druckentlastung des invertierten Steuerdruckeingangs p43 zu einem Druckanstieg in der internen Bremssteuerleitung 40 und in der Anhängersteuerleitung 82 (Kupplungskopf "Bremse" (gelb)). Dazu passiert der Druck das Wechselventil 10. Das Wechselventil 10 verschließt den Durchgang zwischen der Anhängersteuerleitung 82 und dem Relaisventils 46. Während der Betätigung der Feststellbremse wird die elektronische Anhängersteuerung zusammen mit der Überdruckventilunterdrückung deaktiviert. Alternativ führt der Fall "Zündung aus" zum gleichen Szenario bzw. Ergebnis. Da nun parallel zur Betätigung der Feststellbremse das Bremspedal (vgl. Fig. 1) betätigt werden könnte, bleibt das 3/2-Magnetventils 112 geöffnet und das Relaisventil 46 wird unter Druck betrieben und erzeugt einen pneumatischen Ausgangsdruck. Wie weiter oben beschrieben, können derartige Betriebsbedingungen in Verbindung mit einem geringen Volumen (typischerweise 500 mm³) in einer Bremssteuerleitung 62 zwischen dem pneumatischen Ausgang des hydraulischen Relaisventils 46 und dem Wechselventil 10 zu häufigen Druckschwankungen und damit zu Oszillationen führen.

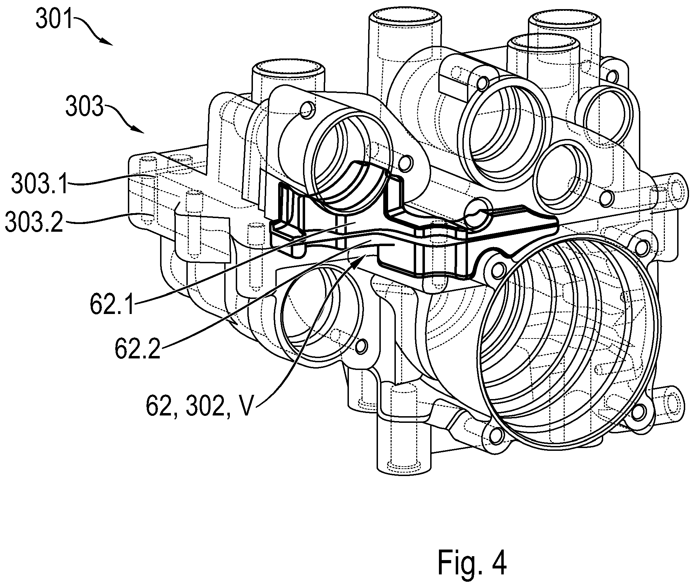

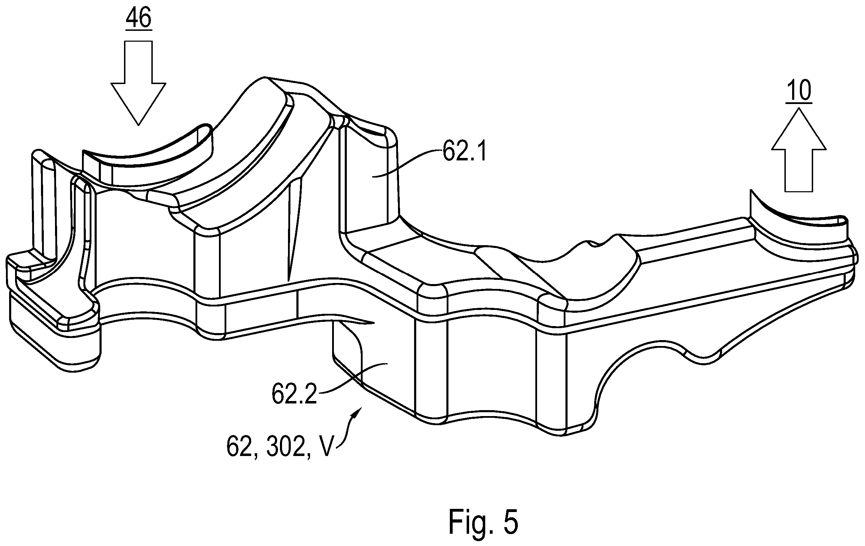

Zur Unterdrückung der Oszillation ist gemäß Fig. 3 vorgesehen, dass die Bremssteuerleitung 62 eine Kavität 302 mit einem vergrößerten Volumen V begrenzt, d.h. die von der Bremssteuerleitung 62 begrenzte Kavität 302 schließt ein Volumen Vein, das größer ist als 500 mm³. In den durch Fig. 3 bis 5 gezeigten Ausführungsbeispielen nimmt das Volumen V der Kavität 302 jeweils einen Wert von 1200 mm³ an. Dieses vergrößerte Volumen V verhindert ein zu schnelles Befüllen der Bremssteuerleitung 62. In dem Ausführungsbeispiel nach Fig. 4 und 5 wird die Bremssteuerleitung 62 durch ein Gehäuse 303 des Ventilsystems 301 geformt. Die durch Fig. 4 und 5 gezeigte komplexe Form der Kavität 302 wird durch das Gießen von zwei Gehäuseteilen 303.1, 303.2 ermöglicht, die miteinander verbunden werden. Im Detail weist das Gehäuse 303 ein gegossenes erstes Gehäuseteil 303.1 und ein gegossenes zweites Gehäuseteil 303.2 auf, wobei das erste Gehäuseteil 303.1 und das zweite Gehäuseteil 303.2 zusammengesetzt sind und gemeinsam die Bremssteuerleitung 62 formen. In dem durch Fig. 4 gezeigten Ausführungsbeispiel formt das erste (obere) Gehäuseteil 301.1 einen ersten Teil 62.1 der Bremssteuerleitung 62 und das zweite (untere) Gehäuseteil 301.2 einen zweiten Teil 62.2 der Bremssteuerleitung 62.

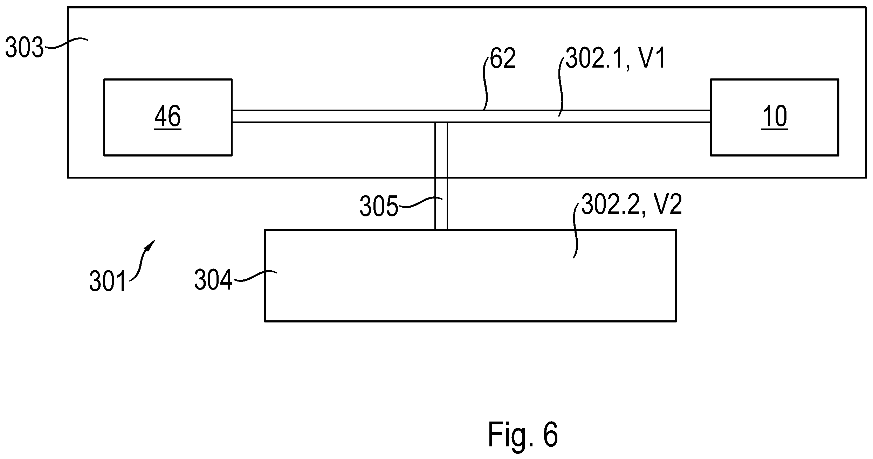

Fig. 6 zeigt ein alternatives Ausführungsbeispiel, bei dem die Kavität zu einem großen Teil durch einen Behälter 304 zum Speichern von Druckluft geformt wird, der außerhalb des Gehäuses 303 angeordnet ist. Der Behälter 304 umfasst eine pneumatische Verbindungsleitung 305, welche den Behälter 304 pneumatisch mit der Bremssteuerleitung 62 verbindet. Das Volumen der Kavität setzt sich in dem durch Fig. 6 gezeigten Ausführungsbeispiel aus einem ersten Volumen V1 einer ersten Teilkavität 302.1 und aus einem zweiten Volumen V2 einer zweiten Teilkavität 302.2 zusammen. Druckluft, die durch das Relaisventil 46 ausgegeben wird, kann in die Bremssteuerleitung 62 und über die Verbindungsleitung 305 in den Behälter 304 strömen und sich insbesondere in dem Behälter 304 sammeln, ohne dort einen derart hohen Druck aufzubauen, der zu der vorstehend beschriebenen Oszillation führt. Der Behälter 304 begrenzt zusammen mit seiner Verbindungsleitung eine größere Teilkavität als die Bremssteuerleitung 62. Dadurch kann die Bremssteuerleitung 62 relativ klein dimensioniert werden, sodass die als Ganzes vergrößerte Kavität nicht zu einer Vergrößerung des Gehäuses 303 führt. Im Detail setzt sich die Kavität aus einer kleineren ersten Teilkavität 302.1 (kleineres erstes Volumen V1) und einer größeren zweiten Teilkavität 302.2 (größeres zweites Volumen V2) zusammen. Dabei wird die erste Teilkavität 302.1 durch die Bremssteuerleitung 62 begrenzt, wohingegen die zweite Teilkavität 302.2 durch den Behälter 304 gemeinsam mit dessen Verbindungsleitung 305 begrenzt wird.

### Bezugszeichen

- p: pneumatischer Ausgangsdruck
- p22: Bremssteuerausgang
- p43: invertierter Steuerdruckeingang
- V: Volumen der Bremssteuerleitung
- V1: erstes Volumen
- V2: zweites Volumen

- 10: Wechselventil
- 14: Einlassventil
- 16: Auslassventil
- 18: weiteres Relaisventil ("Hauptrelaisventil")
- 32a: Steuerdruckleitung
- 32b: Steuerdruckleitung
- 40: Bremssteuerleitung
- 46: Relaisventil
- 62: interne Bremssteuerleitung
- 62.1: erster Teil Bremssteuerleitung
- 62.2: erster Teil Bremssteuerleitung
- 80: ausgangsseitige Bremssteuerleitung
- 82: Anhängersteuerleitung/Kupplungskopf "Bremse" (gelb)
- 84: elektronisches Steuergerät
- 112: 3/2-Magnetventil

- 201: Bremssystem
- 202: Hauptzylinder
- 203: Bremspedal
- 204: Kolbenschieber
- 205: Feder
- 206: Hydrauliksteuerkanal
- 207: Anhänger-Bremsdruckregelsystem
- 208: Backup-Relaisventilanordnung
- 209: Kolben-Feder-Struktur
- 210: Backuprelaisventil
- 211: Lufteingang
- 212: Luftausgang
- 213: Entlüftungsanschluss
- 214: Armatur
- 215: Magnetventil

- 301: Ventilsystem
- 302: Kavität
- 302.1: erste Teilkavität
- 302.2: zweite Teilkavität
- 303: Gehäuse
- 303.1: erstes Gehäuseteil
- 303.2: zweites Gehäuseteil
- 304: Behälter
- 305: pneumatische Verbindungsleitung

## Patentansprüche

1. Ventilsystem (301) für ein hydraulisch bremsbares Zugfahrzeug, welches ein Anhängerfahrzeug zieht, das Ventilsystem (301) umfassend
- ein Relaisventil (46),
- ein Wechselventil (10) und
- eine Bremssteuerleitung (62),
wobei
- das Relaisventil (46) mittels eines hydraulischen Steuerdrucks betätigt wird, sodass die Höhe eines pneumatischen Bremsdrucks eingestellt wird, der durch das Relaisventil (46) ausgegeben wird, um ein pneumatisches Bremssystem des Anhängerfahrzeugs mit Druckluft zu versorgen,
- die Bremssteuerleitung (62) das Relaisventil (46) mit dem Wechselventil (10) pneumatisch verbindet, und
- die Bremssteuerleitung (62) mit einer Kavität (302; 302.1, 302.2) verbunden ist, dessen Volumen (V; V1, V2) größer ist als 500 mm³.

2. Ventilsystem (301) nach Anspruch 1, wobei das Volumen (V; V1, V2) wenigstens 1200 mm³ groß ist.

3. Ventilsystem (301) nach Anspruch 1 oder 2, wobei die Bremssteuerleitung (62) die Kavität (302) begrenzt.

4. Ventilsystem (301) nach einem der vorstehenden Ansprüche, das Ventilsystem (301) weiterhin umfassend ein Gehäuse (303), wobei das Gehäuse (303) die Bremssteuerleitung (62) wenigstens teilweise formt.

5. Ventilsystem (301) nach Anspruch 4, wobei
- das Gehäuse (303) ein gegossenes erstes Gehäuseteil (303.1) und ein gegossenes zweites Gehäuseteil (303.2) umfasst, und
- das erste Gehäuseteil (303.1) und das zweite Gehäuseteil (303.2) zusammengesetzt sind und gemeinsam die Bremssteuerleitung (62) formen.

6. Ventilsystem (301) nach Anspruch 5, wobei
- das erste Gehäuseteil (301.1) einen ersten Teil (62.1) der Bremssteuerleitung (62) formt, und
- das zweite Gehäuseteil (301.2) einen zweiten Teil (62.2) der Bremssteuerleitung (62) formt.

7. Ventilsystem (301) nach einem der vorstehenden Ansprüche, das Ventilsystem (301) weiterhin umfassend einen Behälter (304) zum Speichern von Druckluft, wobei der Behälter (304) zwischen dem Relaisventil (46) und dem Wechselventil (10) mit der Bremssteuerleitung (62) verbunden ist.

8. Ventilsystem (301) nach Anpruch 7, wobei
- sich die Kavität aus einer kleineren ersten Teilkavität (302.1) und einer größeren zweiten Teilkavität (302.2) zusammensetzt,
- die erste Teilkavität (302.1) durch die Bremssteuerleitung (62) begrenzt wird, und
- die zweite Teilkavität (302.2) durch den Behälter (304) begrenzt wird.

9. Ventilsystem (301) nach einem der vorstehenden Ansprüche, das Ventilsystem (301) weiterhin umfassend
- ein elektronisches Steuergerät (84) und
- ein weiteres Relaisventil (18),
wobei
- das elektronische Steuergerät (84) in einem Normalbetrieb dazu eingerichtet ist, das Ventilsystem (301) derart zu steuern, dass das weitere Relaisventil (18) einen Bremssteuerdruck für das pneumatische Bremssystem des Anhängerfahrzeugs bereitstellt, und
- das Relaisventil (46) im Sinne eines Redundanzventils dazu eingerichtet ist, bei einem Ausfall des elektronischen Steuergeräts (84) mittels des hydraulischen Steuerdrucks derart betätigt zu werden, dass das Relaisventil (46) das pneumatische Bremssystem des Anhängerfahrzeugs mit Druckluft versorgt.

10. Ventilsystem (301) nach einem der vorstehenden Ansprüche, wobei
- das Relaisventil (46) mit einem Hydrauliksteuerkanal (206) verbunden ist, welcher den hydraulischen Steuerdruck bereitstellt,
- der Hydrauliksteuerkanal (206) mit einem Hauptzylinder (202) verbunden ist, der ein Bremspedal (203) und einen Kolbenschieber (204) aufweist und mit einer Hydraulikflüssigkeit gefüllt ist, und
- der Kolbenschieber (204) durch Betätigen des Bremspedals (203) derart innerhalb des Hauptzylinders (202) verschoben wird, dass der Kolbenschieber (204) die Hydraulikflüssigkeit unter Druck setzt und in den Hydrauliksteuerkanal (206) fördert.
